# EUROPEAN PATENT APPLICATION

(11) **EP 4 825 796 A1**
(43) Date of publication of application: **21.10.2026**
(21) Application number: 24903920.7
(22) Date of filing: 08.10.2024
(51) Int. Cl.: C01B 17/26, H01M 10/0562

(54) **LITHIUM SULFIDE POWDER WITH IMPROVED IONIC CONDUCTIVITY RETENTION AND PREPARATION METHOD THEREOF**

(30) Priority: 15.12.2023 KR 20230183626
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: KO, Young-Seon, Pohang-si, Gyeongsangbuk-do 37837 (KR); KIM, Byoung Ju, Pohang-si, Gyeongsangbuk-do 37671 (KR); SEO, Han Seok, Pohang-si, Gyeongsangbuk-do 37835 (KR); KWON, Ohmin, Incheon 22018 (KR); CHUNG, Garam, Seoul 05279 (KR); SON, Young Geun, Pohang-si, Gyeongsangbuk-do 37669 (KR); PARK, Jung Kwan, Pohang-si, Gyeongsangbuk-do 37560 (KR)
(74) Representative: Zacco Sweden AB
(86) International application number: PCT/KR2024/015323
(87) International publication number: WO 2025/127353

(57) **Abstract**

The present invention relates to lithium sulfide powder and a method for preparing the same, and provides lithium sulfide powder including lithium sulfide (Li₂S) and lithium oxide (Li₂O), and having an oxygen content of 2.4 wt% to 7.1 wt%.

## Description

### [TECHNICAL FIELD]

The present invention relates to an all-solid-state electrolyte, and more particularly, to lithium sulfide powder having an improved ionic conductivity retention rate and a method for preparing the same.

### [BACKGROUND ART]

Secondary batteries are widely used from small electronic devices such as mobile phones or notebook computers to large devices such as electric vehicles (EVs) or energy storage systems (ESSs). As the application fields of secondary batteries have expanded into overall areas of daily life, not only performance such as high energy density and long lifespan, but also safety has been required.

Most electrolytes conventionally used in lithium secondary batteries have been liquid electrolytes using organic solvents. However, as problems such as leakage or fire of the liquid electrolyte have occurred, strict packaging has been required, and there has been a limitation in increasing energy density to a certain level or higher due to such strict packaging. Accordingly, a need for an all-solid-state battery using an inorganic solid electrolyte, rather than an organic liquid electrolyte, has emerged.

The all-solid-state battery excludes an organic solvent such as a liquid electrolyte, and thus can safely manufacture a battery cell. In addition, since an inorganic solid electrolyte is not decomposed over a wide voltage range and has stability, there is an advantage in that high-voltage electrode materials can be utilized.

The solid electrolyte is classified into an oxide-based solid electrolyte and a sulfide-based solid electrolyte, and the sulfide-based solid electrolyte has a characteristic of higher ionic conductivity than the oxide-based solid electrolyte. A main raw material of the sulfide-based solid electrolyte is lithium sulfide (Li₂S). As methods for synthesizing lithium sulfide, a synthesis method using high-energy ball milling, a synthesis method using a wet plasma process, and wet/dry methods using lithium metal have been utilized.

In the case of the lithium sulfide, not only purity but also a factor relating to air stability when applied to a solid electrolyte is considered an important factor. Specifically, when the lithium sulfide is applied to a solid electrolyte, interest in providing lithium sulfide capable of improving air stability of the solid electrolyte has increased.

### [SUMMARY OF THE INVENTION]

### [Technical Problem]

A technical problem to be solved by the present invention is to provide lithium sulfide powder which provides a solid electrolyte having improved air stability because, not only in terms of purity but also when applied to a solid electrolyte, a decrease width of ionic conductivity after exposure to air is small.

Another technical problem to be solved by the present invention is to provide a method for preparing lithium sulfide powder having the above-described advantages.

### [Technical Solution]

Lithium sulfide powder according to an embodiment of the present invention relates to lithium sulfide powder for an all-solid-state electrolyte, and may include lithium sulfide (Li₂S) and lithium oxide (Li₂O), and may have an oxygen content of 2.4 wt% to 7.1 wt%. In an embodiment, the lithium sulfide powder may satisfy the following Equation 1. <Equation 1> $0.70 < \left[{Li}_{2}O\right] / oxygen content \leq 2.0$ wherein, in Equation 1, [Li₂O] means an XRD peak ratio (%) of lithium oxide in the lithium sulfide powder, and the oxygen content means an oxygen content (wt%) in the lithium sulfide powder.

In an embodiment, Equation 1 may be 0.80 to 1.20. In an embodiment, the lithium oxide (Li₂O) may satisfy 10.0% or less as an XRD peak ratio (%). In an embodiment, a content ratio of the lithium oxide (Li₂O) to lithium carbonate (Li₂CO₃) in the lithium sulfide powder may satisfy the following Equation 2. <Equation 2> $lithium oxide \left({Li}_{2}O\right) > lithium carbonate \left({Li}_{2}{CO}_{3}\right) \geq 0$

In an embodiment, the lithium sulfide powder may not include lithium carbonate (Li₂CO₃). A method for preparing lithium sulfide powder according to another embodiment of the present invention may include preparing a lithium-carbon compound by mixing a carbon raw material and a lithium compound; filtering a solution in which the lithium-carbon compound and a solvent are mixed; drying the filtrate in a temperature range of 30°C to 170°C; and heat-treating the dried product in a temperature range of 650°C to 950°C. In an embodiment, in the filtering of the solution in which the lithium-carbon compound and the solvent are mixed, a dielectric constant value of the solvent may be 20 to 35.

In an embodiment, in the preparing of the lithium-carbon compound by mixing the carbon raw material and the lithium compound, a weight ratio of the lithium compound to the carbon raw material may be 0.25 to 0.5. In an embodiment, the preparing of the lithium-carbon compound by mixing the carbon raw material and the lithium compound may include heat-treating a mixture in which the carbon raw material and the lithium compound are mixed in a temperature range of 850°C to 950°C.

In an embodiment, the heat-treating of the mixture in which the carbon raw material and the lithium compound are mixed in the temperature range of 850°C to 950°C may be performed at a temperature increase rate of 3°C/min to 7°C/min. In an embodiment, the drying of the filtrate may be performed at a vacuum pressure in a range of 10 mbar to 500 mbar.

In an embodiment, the heat-treating of the dried product may be performed at 5°C/min to 20°C/min. In an embodiment, the heat-treating of the dried product may be performed under an inert gas atmosphere. In an embodiment, the heat-treating of the dried product may be performed at a flow rate of the inert gas of 2.0 L/min to 3.0 L/min.

### [Advantageous Effects]

Lithium sulfide powder according to an embodiment of the present invention provides lithium sulfide powder which contains a high oxygen content and can improve air stability because, when applied to a solid electrolyte, a decrease width of ionic conductivity after exposure to air is small.

A method for preparing lithium sulfide powder according to another embodiment of the present invention provides a method for preparing lithium sulfide powder having the above-described advantages by controlling a drying temperature and a heat treatment temperature.

### [BRIEF DESCRIPTION OF THE DRAWINGS]

FIG. 1 shows XRD peaks of finally heat-treated lithium sulfide crystal powder according to drying temperature.
FIG. 2 shows XRD peaks of lithium sulfide crystal powder according to heat treatment conditions.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense. In addition, unless otherwise specifically stated, % means wt%, and 1 ppm means 0.0001 wt%.

Hereinafter, embodiments of the present invention will be described in detail so that a person having ordinary skill in the art to which the present invention pertains can easily practice the present invention. However, the present invention may be embodied in various different forms and is not limited to the embodiments described herein.

Lithium sulfide powder according to an embodiment of the present invention relates to lithium sulfide powder for an all-solid-state electrolyte, and may include lithium sulfide (Li₂S) and lithium oxide (Li₂O). Specifically, the lithium sulfide powder may include lithium oxide (Li₂O) by undergoing a drying and heat treatment process.

In an embodiment, based on 100 wt% of the lithium sulfide powder, the oxygen content in the lithium sulfide powder may be 2.4 wt% to 7.1 wt%. Specifically, the oxygen content may be 2.7 wt% to 4.9 wt%.

When the oxygen content is outside the above-described range, there is a problem in that, when argyrodite is synthesized using Li₂S, an ionic conductivity retention rate before and after exposure to air decreases. In addition, there is a problem in that the ionic conductivity retention rate is affected by a ratio of impurities such as Li₂O, Li₂CO₃, Li₂SO₄, or LiOH. Specifically, even when the above-described oxygen content range is satisfied, when Li₂CO₃ is present at a certain level or higher in addition to Li₂O, there is a problem in that the retention rate of ionic conductivity by exposure to air decreases.

In an embodiment, the lithium sulfide powder may satisfy the following Equation 1. <Equation 1> $0.70 < \left[{Li}_{2}O\right] / oxygen content \leq 2.0$ wherein, in Equation 1, [Li₂O] means an XRD peak ratio (%) of lithium oxide in the lithium sulfide powder, and the oxygen content means an oxygen content (wt%) in the lithium sulfide powder.

Equation 1 means a ratio of lithium oxide to the oxygen content in the lithium sulfide powder. Equation 1 may be more than 0.70 and 2.0 or less. Specifically, Equation 1 may be 0.80 to 1.20, and more specifically, Equation 1 may be 0.86 to 1.20.

When Equation 1 exceeds the upper limit of the above-described range, there may be a problem in that reactivity, such as residue of unreacted materials during argyrodite synthesis, decreases due to high crystallinity of Li₂O. When Equation 1 is below the lower limit of the above-described range, other lithium compounds containing oxygen other than Li₂O, for example, impurities such as Li₂CO₃ and Li₂SO₄, increase, resulting in a problem in that air stabilization degree of argyrodite to which the same is applied decreases.

In an embodiment, the lithium oxide (Li₂O) may satisfy 10.0% or less as an XRD peak ratio (%). Specifically, the lithium oxide (Li₂O) may satisfy 8.2% or less as an XRD peak ratio (%), and more specifically 2.1% to 8.2%.

When the lithium oxide (Li₂O) satisfies the above-described range as an XRD peak ratio (%), lithium sulfide that can be used as a raw material of a solid electrolyte having excellent air stability because a decrease width of ionic conductivity is small can be secured. When the lithium oxide (Li₂O) exceeds the upper limit of the above-described range, purity of the lithium sulfide powder may decrease, and when the lithium oxide (Li₂O) is below the lower limit of the above-described range, there is a problem in that air stability of the solid electrolyte decreases.

In an embodiment, a content ratio of the lithium oxide (Li₂O) to lithium carbonate (Li₂CO₃) in the lithium sulfide powder may satisfy the following Equation 2. <Equation 2> $lithium oxide \left({Li}_{2}O\right) > lithium carbonate \left({Li}_{2}{CO}_{3}\right) \geq 0$

Equation 2 is an index indicating that the content of lithium oxide may be greater than the content of lithium carbonate, and the content of lithium carbonate may be greater than or equal to 0. Since lithium carbonate has higher chemical stability than lithium oxide, lithium carbonate has low reactivity during solid electrolyte synthesis and causes a problem of reducing yield. This means that, as the ratio of lithium carbonate in lithium sulfide powder increases, the value thereof as a raw material of a solid electrolyte having excellent air stability decreases. Accordingly, when the lithium sulfide powder does not include lithium carbonate or includes only a very small amount of lithium carbonate, there is an advantage in that air stability is improved when applied to a solid electrolyte.

In an embodiment, the lithium sulfide powder may not include lithium carbonate (Li₂CO₃). As described above, lithium carbonate has low reactivity during solid electrolyte synthesis and can reduce yield, and therefore, by not including lithium carbonate, there is an advantage in that air stability is improved when applied to a solid electrolyte.

A method for preparing lithium sulfide according to another embodiment of the present invention includes preparing a lithium-carbon compound by mixing a carbon raw material and a lithium compound, filtering a solution in which the lithium-carbon compound and a solvent are mixed, drying the filtrate, and heat-treating the dried product. The description of the lithium sulfide may refer to the above description.

In an embodiment, the carbon raw material may include, as non-limiting examples, at least one of soft carbon, hard carbon, petroleum coke, coal-based needle coke, coal-based pitch coke, natural graphite, and artificial graphite. In an embodiment, the lithium-carbon compound may include at least one of lithium sulfate, lithium hydroxide, lithium oxide, and lithium carbonate.

In an embodiment, in the preparing of the lithium-carbon compound by mixing the carbon raw material and the lithium compound, the weight ratio of the lithium compound to the carbon raw material may be 0.25 to 0.5. Specifically, the ratio may be 0.30 to 0.35.

When the ratio exceeds the upper limit, there is a problem in that unreacted lithium compound raw material, specifically lithium sulfate, remains in the lithium-carbon compound after heat treatment. When the ratio is below the lower limit, there is a problem in that the amount of carbon raw material used is large, which is disadvantageous in terms of process cost.

In an embodiment, the preparing of the lithium-carbon compound by mixing the carbon raw material and the lithium compound may be performed by heat-treating the carbon raw material and the lithium compound. Specifically, the heat treatment may be performed on a mixture in which the carbon raw material and the lithium compound are mixed in a temperature range of 850°C to 950°C.

In an embodiment, the step of performing the mixture in which the carbon raw material and the lithium compound are mixed in a temperature range of 850°C to 950°C may be performed at a temperature increase rate of 3°C/min to 7°C/min. Specifically, the temperature increase rate may be 4°C/min to 6°C/min.

The step of filtering the solution in which the lithium-carbon compound and the solvent are mixed may be a step of controlling the content of lithium oxide in lithium sulfide through a solvent extraction method. Specifically, after lithium sulfate is thermally reduced in a gas phase using a reducing agent such as carbon, solvent extraction may be performed in order to separate the resulting lithium sulfide from a residual reducing agent.

The solvent may be, for example, an alcohol-based solvent. The alcohol-based solvent may be ethanol as a non-limiting example. When ethanol is used as the alcohol-based solvent, lithium sulfide is easily dissolved, but carbon is not dissolved, and thus only lithium sulfide can be extracted in a solution phase during a filtration process.

In an embodiment, in the step of extracting the filtrate, the solvent may have a dielectric constant value of 20 to 35 at room temperature. By using a solvent having the above dielectric constant value range, lithium sulfide can be dissolved at room temperature and can be easily separated from the residual reducing agent.

Specifically, an extraction reactant may be partially dissociated in a solution phase by the following Reaction Scheme 1, or may simultaneously reach dynamic equilibrium with an ion pair.

[Reaction Scheme 1] Li₂S(s) + CH₃CH₂OH(l) → LiSH + Li(CH₃CH₂O) ↔ 2Li⁺ + HS⁻ + (CH₃CH₂O)⁻

The step of drying the filtrate may be performed in a temperature range of 30°C to 170°C. Specifically, the temperature range may be 40°C to 165°C, and more specifically 60°C to 150°C.

The step of drying the filtrate may be a step of evaporating and slowly drying a solution including lithium sulfide extracted through filtration. Through the drying step, the solution including lithium sulfide may be evaporated to obtain white powder, which may be expressed according to the following Reaction Scheme 2.

[Reaction Scheme 2] 2Li⁺ + HS⁻ + (CH₃CH₂O)⁻ + nCH₃CH₂OH(l) → Li₂S(s) + (n+1)CH₃CH₂OH(l)↑

The white powder obtained according to Reaction Scheme 2 may be a crude dry product in a form in which an ethanol solvent is adsorbed or absorbed around lithium sulfide or a mixture of extraction reactants.

In addition, due to heat applied during the drying process of the solution, a difference in acid-base degree change between hydrosulfide ions (HS⁻) and ethanol molecules occurs, and thus a part of hydrosulfide ions may leave the system in the form of hydrogen sulfide gas through a side reaction such as the following Reaction Scheme 3.

[Reaction Scheme 3] 2Li⁺ + HS⁻ + (CH₃CH₂O)⁻ + CH₃CH₂OH(l) → 2Li(CH₃CH₂O) + H₂S(g)↑

In an embodiment, the step of drying the filtrate may be performed at a vacuum pressure in a range of 10 mbar to 500 mbar. Specifically, the vacuum pressure range may be 10 mbar to 400 mbar, more specifically 10 mbar to 250 mbar, and even more specifically 15 mbar to 200 mbar. By drying the filtrate under vacuum pressure conditions within the above-described range, there is an advantage in that oxygen content can be lowered to minimize generation of impurities.

The step of heat-treating the dried dry product may be performing the dry product that has undergone the drying process in a temperature range of 650°C to 950°C. Specifically, the temperature range may be a temperature range of 700°C to 900°C.

In an embodiment, the alcohol-based solvent may be, as non-limiting examples, at least one of ethanol, methanol, and propanol. By controlling the drying temperature in the step of drying the filtrate, the dielectric constant value of the solvent becomes different, and thus the degree of dissociation of ions may change. Specifically, when the drying temperature increases, the dielectric constant of the solvent decreases, so that ions are difficult to dissociate in the solvent phase. This may weaken the basicity of hydrosulfide ions and delay or hinder generation of hydrogen sulfide, thereby inducing generation of lithium sulfide in terms of the entire reaction. This is expressed as the following Reaction Scheme 4, and means that the oxygen content in the final lithium sulfide powder can be controlled by controlling the drying temperature.

[Reaction Scheme 4] LiSH + Li(CH₃CH₂O) + CH₃CH₂OH(l) → Li₂S(s) + 2CH₃CH₂OH(l)

The step of heat-treating the dried dry product is to obtain final lithium sulfide (Li₂S) powder by applying heat to the dried dry product. In an embodiment, the dried dry product may be performed in a temperature range of 650°C to 950°C, specifically in a temperature range of 700°C to 900°C. In an embodiment, the temperature increase rate of the heat-treating step may be 5°C/min to 20°C/min. Specifically, the temperature increase rate may be 5°C/min to 15°C/min, and more specifically 8°C/min to 12°C/min.

In an embodiment, in the step of heat-treating the dried dry product, a maximumtemperature holding time may be 1 hour to 6 hours. In an embodiment, the step of heat-treating the dried dry product may include performing heat treatment for the above-described time and then natural cooling.

When the upper limits of the above-described temperature, temperature increase rate, and holding time are exceeded, lithium sulfide powder including lithium oxide is excessively sintered or hardened and aggregated, causing problems such as excessive load in a pulverization process for product packaging and thus decreasing ease of handling. When the temperature, temperature increase rate, and holding time are below the lower limits, impurities such as lithium hydroxide or lithium carbonate are not easily removed, and thus purity of lithium sulfide decreases.

In an embodiment, the step of heat-treating the dried dry product may be performed under an inert gas atmosphere. The inert gas may include, for example, at least one of helium, neon, krypton, xenon, nitrogen, and argon.

In an embodiment, the step of heat-treating the dried product may be performed at a flow rate of the inert gas of 2.0 L/min to 3.0 L/min. Specifically, the flow rate may be 2.3 L/min to 3.8 L/min.

When the flow rate exceeds the upper limit of the above-described range, there is a problem in that the process cost increases due to use of an excessive amount of inert gas in the manufacturing process. When the flow rate is below the lower limit of the above-described range, organic solvents evaporated from the dry product or decomposition products of the organic solvents are not smoothly discharged and remain in the form of carbides, thereby lowering purity of lithium sulfide.

Hereinafter, specific Examples of the present invention will be described. However, the following Examples are merely specific embodiments of the present invention, and the present invention is not limited to the following Examples.

### <Experimental Example>

### <Examples 1 to 6> Effect of Drying Temperature

720 g of graphite and 240 g of lithium sulfate monohydrate were uniformly mixed with each other, and then the mixture was heated to 900°C at a rate of 5°C/min under an inert gas (Ar) atmosphere. Subsequently, when heat treatment was performed at 900°C for 2 hours, lithium sulfate was reduced to lithium sulfide and obtained in a state mixed with graphite.

Thereafter, the obtained mixture was naturally cooled under an inert gas atmosphere and then stored in a glove box. The mixture was then subdivided and used in all Example and Comparative Example experiments.

Under an inert gas atmosphere, 20 g of the thermal reduction product was added to 100 mL of ethanol and sufficiently stirred. After stirring was stopped, when the mixed slurry was filtered, graphite that was not dissolved in ethanol remained in a wet state in the filter funnel, and the remainder was obtained in a solution state in a filtration flask. At this time, the color of the solution was light yellow-green.

Thereafter, the prepared filtrate was transferred to a 1 L round-bottom flask, mounted on a rotary evaporator, and then the solution was evaporated and concentrated using a vacuum pump to perform a drying process. At this time, experiments were performed under vacuum for a total of 30 minutes while varying each drying temperature, and experimental conditions according to each Example are summarized in Table 1 below.

Specifically, the vacuum pressure was controlled within a range of 15 mbar to 200 mbar, and the temperature during drying was controlled using an external constant temperature bath. When drying was performed at a temperature of 60°C or lower, a water bath was heated and used, and when a temperature of 80°C or higher was required, a constant temperature bath containing silicone oil was used. The dried powder thus obtained was heat-treated at 800°C for 2 hours to obtain lithium sulfide powder. The heat treatment temperature increase rate was 10°C/min, and the flow rate condition of Ar gas was 2.5 L/min.

### <Comparative Example 1> Effect of Drying Temperature

The process was performed in the same manner as described in Examples 1 to 6, except that the drying temperature and pressure were 180°C and 600 mbar, respectively.

### <Examples 7 and 8> Effect of Heat Treatment Temperature

The procedure from thermal reduction of lithium sulfate to extraction of a lithium sulfide solution was performed in the same manner as described in Examples 1 to 6 above. The extraction solution was dried under reduced pressure at 100°C to obtain a white dry product, and the dried powder thus obtained was heat-treated at 700°C and 900°C, respectively, for 2 hours. The heat treatment temperature increase rate was 10°C/min, and the flow rate condition of Ar gas was 2.5 L/min.

### <Comparative Examples 2 and 3> Effect of Heat Treatment Temperature

The procedure from thermal reduction of lithium sulfate to extraction of a lithium sulfide solution was performed in the same manner as described in Examples 1 to 6 above. The extraction solution was dried under reduced pressure at 100°C to obtain a white dry product, and the dried powder thus obtained was heat-treated at 500°C and 600°C, respectively, for 2 hours. The heat treatment temperature increase rate was 10°C/min, and the flow rate condition of Ar gas was 2.5 L/min.

Table 1 below shows heat treatment conversion rate, Li₂S ratio, impurity content ratio, and oxygen content according to drying temperature and heat treatment temperature.

The heat treatment conversion rate is to identify the degree to which the dry product was dried according to drying temperature by comparing the amount of the dry product and the amount of the Li₂S heat-treated product including Li₂O obtained by heat-treating the dry product. Specifically, the heat treatment conversion rate was measured as follows. 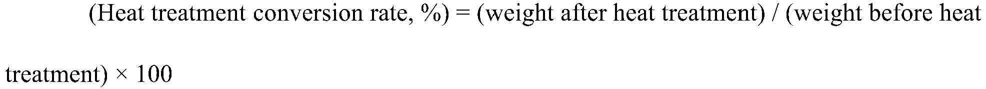 (Heat treatment conversion rate, %) = (weight after heat treatment) / (weight before heat treatment) × 100

The crystalline phase of the lithium sulfide powder was analyzed using an X-ray diffractometer of Rigaku D/MAX 2500 equipment.

The oxygen content value in the powder was measured using an elemental analyzer of Leco ON836-MC equipment.

**[Table 1]**

| Classfication | Drying Temperature | Drying Pressure | Heat Treatment Temperature | Heat Treatment Conversion Rate | Li₂S Ratio | Impurity Content Ratio (XRD) | | | Oxygen Content | Li₂O(%)/Oxygen Content | XRD Peak Ratio (Li₂S/Li₂O ) |
|---|---|---|---|---|---|---|---|---|---|---|---|
| | | | | crude→Li ₂S | | Li₂O | Li₂CO₃ | Li₂SO₄ | | | |
| | (°C) | (mbar) | (°C) | | | (%) | (%) | (%) | (wt%) | (%/wt%) | |
| Example 1 | 40 | 15 | 800 | 32 | 100 | 8.2 | - | - | 7.1 | 1.15 | 12.2 |
| Example 2 | 60 | 30 | 800 | 43 | 100 | 6.1 | - | - | 5.1 | 1.20 | 16.4 |
| Example 3 | 80 | 30 | 800 | 64 | 100 | 4.1 | - | - | 3.6 | 1.14 | 24.4 |
| Example 4 | 100 | 100 | 800 | 68 | 100 | 2.7 | - | - | 2.6 | 1.04 | 37.0 |
| Example 5 | 120 | 100 | 800 | 71 | 100 | 2.4 | - | - | 2.4 | 1.00 | 41.7 |
| Example 6 | 150 | 200 | 800 | 74 | 100 | 2.1 | - | - | 2.5 | 0.84 | 47.6 |
| Comparative Exa mple 1 | 180 | 600 | 800 | 84 | 100 | 2.5 | 1.1 | 8.7 | 10.5 | 0.11 | 40.0 |
| Comparative Example 2 | 100 | 100 | 500 | 71 | 100 | 2.1 | 0.7 | - | 4.0 | 0.53 | 47.6 |
| Comparative Example 3 | 100 | 100 | 600 | 71 | 100 | 2.3 | 0.3 | - | 3.3 | 0.70 | 43.5 |
| Example 7 | 100 | 100 | 700 | 70 | 100 | 2.4 | - | - | 2.8 | 0.86 | 41.7 |
| Example 8 | 100 | 100 | 900 | 69 | 100 | 2.6 | - | - | 2.5 | 1.04 | 38.5 |
| 1) Relative ratio value of the intensity of the main diffraction peak line of each impurity crystalline phase to the intensity of the main diffraction peak line of Li₂S. | | | | | | | | | | | |

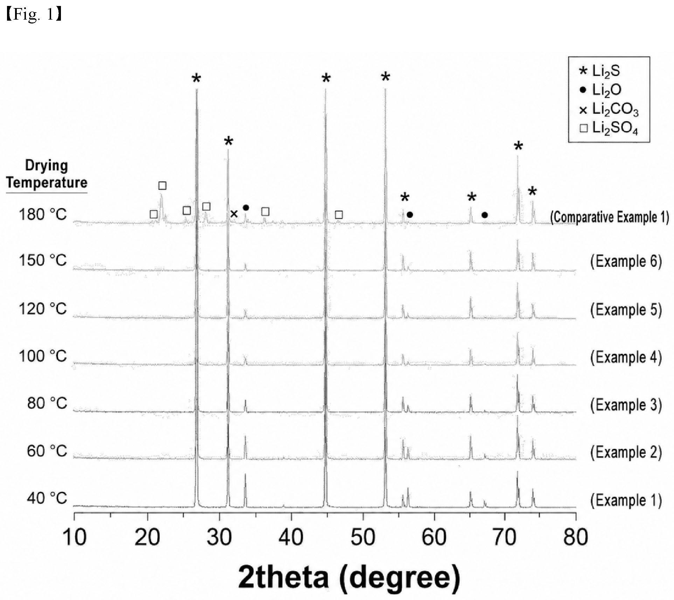

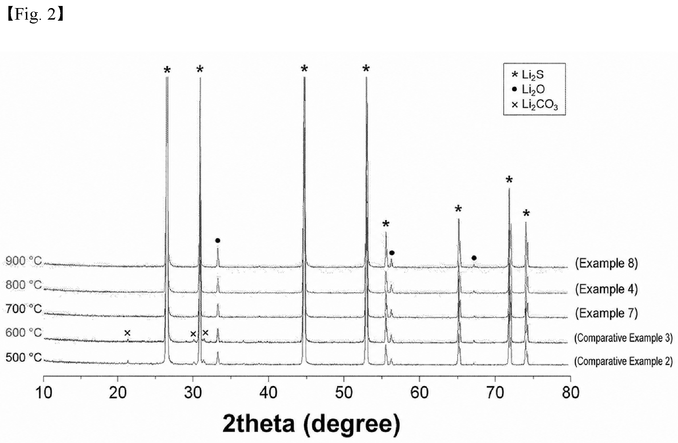

FIG. 1 is an XRD graph showing changes in impurities in final heat-treated lithium sulfide according to drying temperature of the present invention. Referring to Table 1 and FIG. 1, it was confirmed that a main impurity in lithium sulfide heat-treated at a temperature of 800°C was lithium oxide (Li₂O), and as the drying temperature increased, the impurity content decreased and the total oxygen content decreased. Specifically, when the drying temperature is excessively low, an excessively long time is required to obtain a powder-form dry product, and even if a dry product is obtained, it is excessively wet, and thus it is expected to be easily deformed upon exposure to the outside air and inconvenient to handle. In addition, when the drying temperature is excessively high, as confirmed in FIG. 1 and Comparative Example 1, not only lithium oxide but also lithium carbonate (Li₂CO₃) and lithium sulfate (Li₂SO₄) were simultaneously generated as impurities in the heat-treated lithium sulfide, and in particular, the amount of lithium sulfate significantly increased, and thus it was confirmed that the total oxygen content increased to 10 wt% or more. FIG. 2 is an XRD graph showing changes in impurities in lithium sulfide according to heat treatment temperature of the present invention.

Referring to FIG. 2, it can be confirmed that, when the temperature is low, Li₂O and Li₂CO₃ exist in lithium sulfide, and only Li₂O is observed from 700°C.

### <Evaluation Example>

Solid electrolyte (Li₆PS₅Cl) synthesis was performed using a dry milling method. Li₂S, P₂S₅, and LiCl were mixed at 300 rpm for about 8 hours using a planetary mill, and then pellets were prepared at 300 MPa and synthesized through heat treatment at 550°C under an Ar atmosphere. At this time, the oxygen content of the lithium sulfide used was as shown in Table 2 below. In the case of lithium sulfide including only lithium oxide, samples shown in Examples 2 and 4 were used. In addition, for comparison, Comparative Example 4 used reagent-grade lithium sulfide having a purity of 99.9%. In the case of Example 9, as lithium sulfide simultaneously including lithium oxide and lithium carbonate, a sample obtained by drying the extraction solution of lithium sulfide under reduced pressure at 60°C and heat-treating the dried product at 600°C for 2 hours was used.

For comparison with Example 9, the sample shown in Comparative Example 3 was used. After pellets of the solid electrolyte were prepared, a positive electrode was bonded to the upper portion and counter electrode In was bonded to the lower portion, followed by densification at 500 MPa. After assembling an all-solid-state battery cell, a formation cycle was performed at 0.1 C in a 30°C chamber to measure an ionic conductivity value.

In order to evaluate air stabilization degree of the solid electrolyte, the solid electrolyte synthesized under the above-described conditions was exposed in a dry room atmosphere (dew point -55°C to -45°C) for 8 hours, and then a battery cell was prepared by the same method as the above conditions, and an ionic conductivity value was measured under the same conditions.

**[Table 2]**

| Classification | Lithium Sulfide | | | | | Solid Electrolyte | | |
|---|---|---|---|---|---|---|---|---|
| | Purity | Impurity Content Ratio¹⁾ | | Oxygen Content | [Li₂O]/Oxygen Content | Ionic Conductivity | | |
| | | Li₂O | Li₂CO₃ | | | Before Exposure | After Exposure | Retention Rate |
| | (%) | (%) | (%) | (wt%) | | (mS cm⁻¹) | (mS cm⁻¹) | (%) |
| Example 2 | | 6.1 | - | 5.1 | 1.20 | 4.0 | 3.0 | 75 |
| Example 4 | | 2.7 | - | 2.6 | 1.04 | 3.0 | 2.3 | 77 |
| Example 9 | | 4.8 | 0.4 | 4.1 | 1.17 | 2.9 | 2.3 | 79 |
| Comparative Example 3 | | 2.3 | 0.3 | 3.3 | 0.70 | 3.1 | 2.3 | 74 |
| Comparative Example 4 | 99.9 | - | - | 0.4 | - | 3.5 | 2.6 | 74 |
| 1) Relative ratio value of the intensity of the main diffraction peak line of each impurity crystalline phase to the intensity of the main diffraction peak line of Li₂S. | | | | | | | | |

Referring to Table 2, it was confirmed that, by controlling the oxygen content within the range of the present invention, an ionic conductivity value at a level superior to that of the solid electrolyte using reagent-grade lithium sulfide of Comparative Example 4 was exhibited. It is considered that, in the crystal structure of the argyrodite material, which is a solid electrolyte, some sulfur atom sites are replaced by oxygen atoms, which are more stable in air, due to oxygen of lithium oxide, thereby improving the retention rate of ionic conductivity due to exposure to air. As in Example 9, when the oxygen content was controlled to 4.1 wt%, and when lithium oxide and lithium carbonate were simultaneously contained but the value of [Li₂O]/oxygen content, which is Equation 1 and in which the ratio of lithium oxide was relatively high, was 1 or more, it was confirmed that even in the case of using lithium sulfide, the ionic conductivity value was at a level superior to that of the solid electrolyte using reagent-grade lithium sulfide. However, as can be seen in Comparative Example 3, even though the oxygen content was controlled to 3.3 wt%, when the ratio of lithium carbonate in the lithium sulfide was higher than the ratio of lithium oxide and the value of [Li₂O]/oxygen content, which is Equation 1, was 0.7, the ionic conductivity value of the solid electrolyte to which the same was applied decreased.

The present invention is not limited to the above embodiments and/or Examples, and may be prepared in various different forms. A person having ordinary skill in the art to which the present invention pertains will understand that the present invention may be embodied in other specific forms without changing the technical spirit or essential features of the present invention. Therefore, the above-described embodiments and/or Examples should be understood as illustrative in all respects and not restrictive.

## Claims

1. A lithium sulfide powder for an all-solid-state electrolyte, comprising:
lithium sulfide (Li₂S); and
lithium oxide (Li₂O),
wherein the lithium sulfide powder has an oxygen content of 2.4 wt% to 7.1 wt%.

2. The lithium sulfide powder of claim 1, satisfying the following Equation 1: <Equation 1> $0.70 < \left[{Li}_{2}O\right] / oxygen content \leq 2.0$ wherein, in Equation 1, [Li₂O] means an XRD peak ratio (%) of lithium oxide in the lithium sulfide powder, and the oxygen content means an oxygen content (wt%) in the lithium sulfide powder.

3. The lithium sulfide powder of claim 1,
wherein Equation 1 is 0.80 to 1.20.

4. The lithium sulfide powder of claim 1,
wherein the lithium oxide (Li₂O) satisfies 10.0% or less as an XRD peak ratio (%).

5. The lithium sulfide powder of claim 1,
wherein a content ratio of the lithium oxide (Li₂O) to lithium carbonate (Li₂CO₃) in the lithium sulfide powder satisfies the following Equation 2: <Equation 2> $lithium oxide \left({Li}_{2}O\right) > lithium carbonate \left({Li}_{2}{CO}_{3}\right) \geq 0 .$

6. The lithium sulfide powder of claim 1,
wherein the lithium sulfide powder does not comprise lithium carbonate (Li₂CO₃).

7. A method for preparing lithium sulfide powder, comprising:
preparing a lithium-carbon compound by mixing a carbon raw material and a lithium compound;
filtering a solution in which the lithium-carbon compound and a solvent are mixed;
drying the filtrate in a temperature range of 30°C to 170°C; and
heat-treating a dried product in a temperature range of 650°C to 950°C.

8. The method for preparing lithium sulfide powder of claim 7,
wherein, in filtering the solution in which the lithium-carbon compound and the solvent are mixed, the solvent has a dielectric constant value of 20 to 35.

9. The method for preparing lithium sulfide powder of claim 7,
wherein, in preparing the lithium-carbon compound by mixing the carbon raw material and the lithium compound,
a weight ratio of the lithium compound to the carbon raw material is 0.25 to 0.5.

10. The method for preparing lithium sulfide powder of claim 7,
wherein preparing the lithium-carbon compound by mixing the carbon raw material and the lithium compound comprises heat-treating a mixture in which the carbon raw material and the lithium compound are mixed in a temperature range of 850°C to 950°C.

11. The method for preparing lithium sulfide powder of claim 10,
wherein heat-treating the mixture in which the carbon raw material and the lithium compound are mixed in the temperature range of 850°C to 950°C is performed at a temperature increase rate of 3°C/min to 7°C/min.

12. The method for preparing lithium sulfide powder of claim 7,
wherein drying the filtrate is performed at a vacuum pressure in a range of 10 mbar to 500 mbar.

13. The method for preparing lithium sulfide powder of claim 7,
wherein heat-treating the dried product is performed at 5°C/min to 20°C/min.

14. The method for preparing lithium sulfide powder of claim 7,
wherein heat-treating the dried product is performed under an inert gas atmosphere.

15. The method for preparing lithium sulfide powder of claim 14,
wherein heat-treating the dried product is performed at a flow rate of the inert gas of 2.0 L/min to 3.0 L/min.
